# EUROPEAN PATENT APPLICATION

(11) **EP 2 660 795 A2**
(43) Date of publication of application: **06.11.2013**
(21) Application number: 12196026.4
(22) Date of filing: 07.12.2012
(51) Int. Cl.: G08G 1/16

(54) **System and method for monitoring a vehicle**

(30) Priority: 30.04.2012 TW 101115327
(71) Applicant: Tung Thih Electronic Co., Ltd., Luchu (TW)
(72) Inventor: Huang, Yu-Wen, Luchu, Taoyuan County 338 (TW)
(74) Representative: Manitz, Finsterwald & Partner GbR

(57) **Abstract**

A system for monitoring a vehicle and a method for monitoring a vehicle are provided. The system includes a digital signal processor, a plurality of monitoring devices, and an event recorder. The digital signal processor measures the speed of the vehicle to generate measurement data, and analyzes the measurement data to obtain monitoring instruction corresponding to the speed of the vehicle. The monitoring device actuates at least one of the monitoring devices according to the monitoring instruction output by the digital signal processor to generate monitoring data. The event recorder receives the monitoring data output and displays and records the monitoring data. Therefore, the present invention provides an all-directional security system and generates a variety of monitoring mechanism according to the speed of the vehicle, so as to achieve an improved monitoring effect.

## Description

### BACKGROUND OF THE INVENTION

### 1. Field of the Invention

This invention relates to systems for monitoring a vehicle, and, more particularly, to a system and method for monitoring a vehicle by generating a variety of monitoring mechanisms according to the speed of the vehicle.

### 2. Description of Related Art

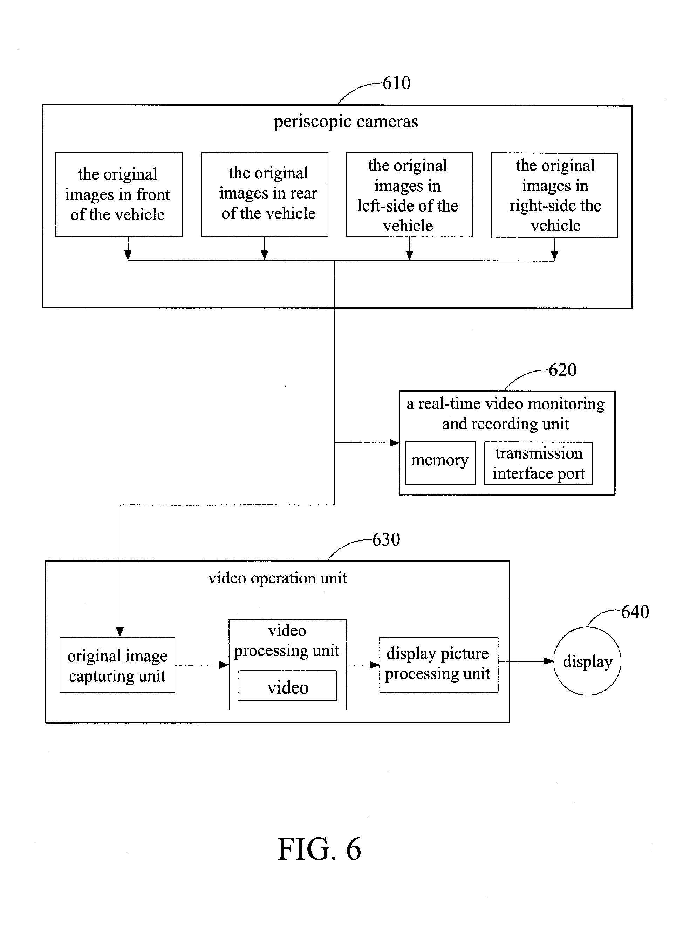

Referring to FIG. 6, a functional block diagram of a panorama vehicle monitoring and recording device disclosed in Taiwanese Patent No. M407861 is provided. The panorama vehicle monitoring and recording device comprises a plurality ofperiscopic cameras 610, a real-time video monitoring and recording unit 620, a video operation unit 630, and a display 640. The periscopic cameras 610 capture original images surrounding the vehicle. The real-time video monitoring and recording unit 620 records the original images captured by the periscopic cameras 610 and driving data of the vehicle in real-time. The video operation unit 630 processes (e.g., distortion calibration, image overlapping and operation combination) the original images and converts the original images into visual images with which the driver is familiar. The visual images provide the driver with space identification characteristics surrounding the vehicle and a real distance ratio.

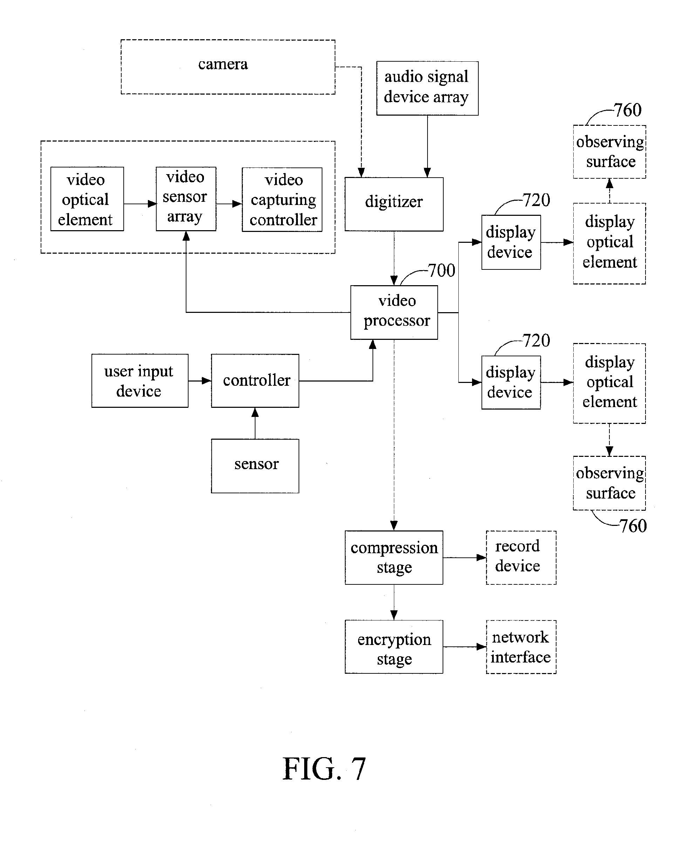

Referring to FIG. 7, a functional block diagram of a system for distortion calibration panoramic vision and a method thereof disclosed in Taiwanese Patent No. 1287402 is provided. The system provides a correct visual composite video that is projected to an observing surface 760 through the shooting of a wide-angle optical unit. The system uses a camera device to shoot an object with the steradian of 360° or 4π. A video processor 700 calibrates uneven brightness or saturation and proceeds space conversion to each image frame. Space conversion is done by linking visual conversion, obtaining geometrical and optical distortion conversion, and displaying geometric and optical conversion for stacking. The distortion calibration proceeds color separation to red, green and blue in order to eliminate the lateral chromatic aberration of optical components. Thus, gained composite videos are presented on a display device 720 by a display system, and the composite videos are projected to the observing surface 760. Therefore, the last videos may not be distorted and match the characteristics of the observing surface 760.

Referring to FIG. 8, a functional block diagram of a danger avoidance system disclosed in US Patent No. US5,521,580 is provided. The system avoids the collision of a vehicle against obstacles and reduces the effect of collision on a vehicle. A traveling condition deciding unit 830 decides whether or not the vehicle is in a dangerous traveling condition on the basis of the respective outputs of a vehicle monitoring system 810 and an ambient condition monitoring system 820. A danger recognition confirming unit 850 decides whether or not the driver is aware of the dangerous traveling condition on the basis of the respective outputs of a driver monitoring system 840, the ambient condition monitoring system 820 and the vehicle monitoring system 810. When the traveling condition deciding unit decides that the vehicle is in the dangerous traveling condition, measures to avoid danger or to reduce the effect of collision on the vehicle are taken only when the driver is not aware of the dangerous traveling condition. Therefore, a danger avoidance effecting unit 860 does not execute the measures to avoid danger or to reduce the effect of collision on the vehicle when the driver is aware of the dangerous traveling condition.

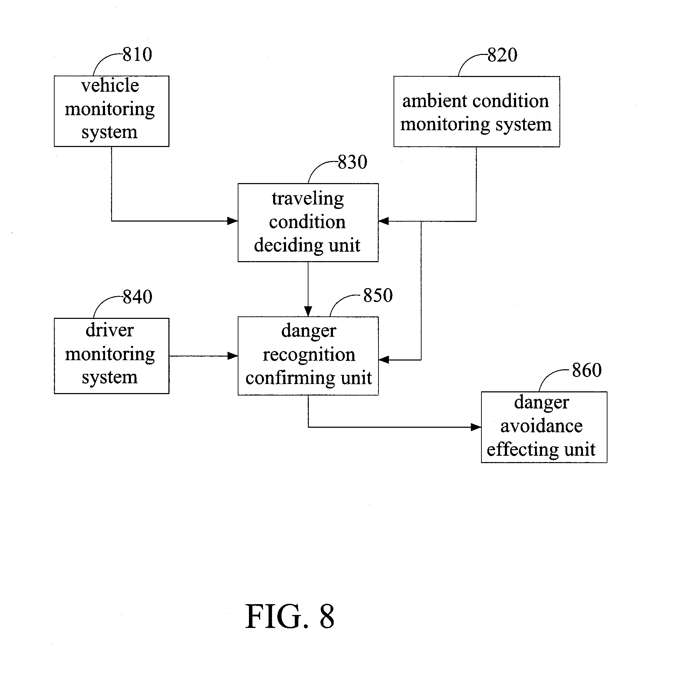

FIG. 6 discloses the techniques that instantaneously process and store the originally shot videos. FIG. 7 proceeds different optical procedures to the captured videos, wherein the optical procedures are geometrical and optical distortion conversion, distortion calibration, etc. FIG. 8 relates to monitoring vehicles, ambient environments, drivers, etc., and the avoidance of dangerous and the instantaneous control. Therefore, those prior arts deeply explored the techniques that monitor a vehicle in movement, but some other safety factors are not considered yet based on the present safety concept.

Therefore, how to design a method for monitoring vehicle in movement and a system thereof that take safety considerations from all aspects shall be an important issue in the art.

### SUMMARY OF THE INVENTION

In view of the above-mentioned problems of the prior art, it is a primary objective of the present invention to provide a vehicle monitoring system in order to provide safety considerations from all aspects for monitoring a vehicle in movement. Therefore, any moving or static object can be detected as well in order to avoid collision. The lane departure warning voluntarily warns under the conditions of the line of visual of a driver being away from the front direction of the vehicle, such as tired driving, bowing to pick up or see something, to cause lane departure.

It is another objective of the present invention to provide a system and method for monitoring a vehicle by generating a variety of monitoring mechanisms according to the speed of the vehicle.

The present invention provides a system for monitoring a vehicle, comprising a digital signal processor, a plurality of monitoring device and an event recorder, wherein the digital signal processor includes a measuring module that measures the speed of a vehicle and generates measurement data; and an analyzing module that analyzes the measurement data to obtain a monitoring instruction corresponding to the speed of the vehicle, at least one of which is actuated by the monitoring instruction output by the digital signal processor to generate monitoring data, and the event recorder receives the monitoring data and displays and records the monitoring data.

The present invention further provides a method for monitoring a vehicle, comprising: measuring the speed of the vehicle and generating measurement data; analyzing the measurement data to obtain a monitoring instruction corresponding to the speed of the vehicle; actuating at least a monitoring device according to the monitoring instruction to generating monitoring data; and receiving the monitoring data output by the at least a monitoring device and displaying and recording the monitoring data.

Compared with the prior art, the present invention monitors a vehicle by generating a variety of monitoring mechanism according to the speed of the vehicle, and takes safety considerations from all aspects.

### BRIEF DESCRIPTION OF DRAWINGS

The invention can be more fully understood by reading the following detailed description of the preferred embodiments, with reference made to the accompanying drawings, wherein:
FIG. 1 is a functional block diagram of a system for monitoring a vehicle of a first embodiment according to the present invention;
FIG. 2 is a functional block diagram of a system for monitoring a vehicle of a second embodiment according to the present invention;
FIG. 3 is a flow chart illustrating a method for monitoring a vehicle according to the present invention;
FIGs. 4 and 5 are two flow charts illustrating a method for monitoring a vehicle in details according to the present invention;
FIG. 6 is a functional block diagram of a panorama vehicle monitoring and recording device disclosed in Taiwanese Patent No. M407861;
FIG. 7 is a functional block diagram of a system for distortion calibration panoramic vision and a method thereof disclosed in Taiwanese Patent No. I287402; and
FIG. 8 is a functional block diagram of a danger avoidance system disclosed in US Patent No. US5,521,580.

### DETAILED DESCRIPTION OF THE INVENTION

The following illustrative embodiments are provided to illustrate the disclosure of the present invention, these and other advantages and effects can be apparently understood by those in the art after reading the disclosure of this specification. The present invention can also be performed or applied by other different embodiments. The details of the specification may be on the basis of different points and applications, and numerous modifications and variations can be devised without departing from the spirit of the present invention.

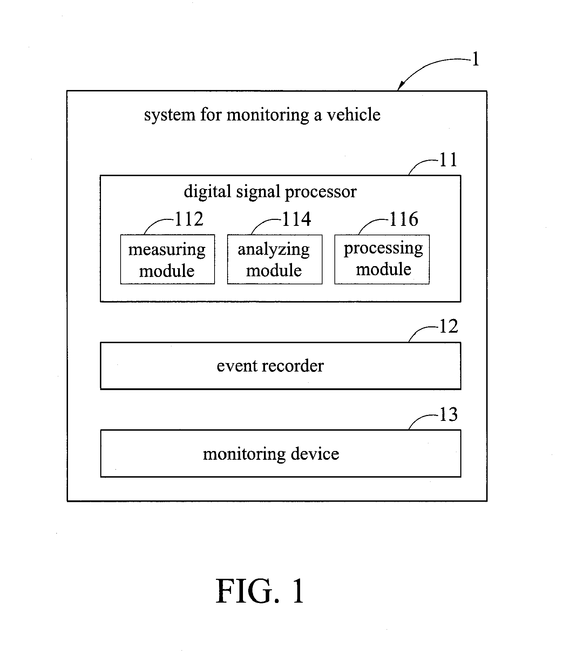

Referring to FIG. 1, a functional block diagram of a system 1 for monitoring a vehicle according to the present invention is provided. The system 1 comprises a digital signal processor 11, an event recorder 12, and a plurality of monitoring devices 13.

The digital signal processor 11 includes a measuring module 112 and an analyzing module 114. The measuring module 112 measures the speed of the vehicle and generates measurement data. The analyzing module 114 analyzes the measurement data to obtain a monitoring instruction corresponding to the speed of the vehicle. For instance, when the speed of the vehicle is less than 10 kilometers per hour, the measuring module 112 measures the speed of the vehicle and generates measurement data that indicate that "the speed is 10 kilometers per hour and the vehicle is not reversing," for example. The analyzing module 114 analyzes the measurement data to obtain an monitoring instruction corresponding to the speed of the vehicle. In an embodiment, the monitoring instruction actuates a front camera, a front sonar sensor, a parking line detection device and/or an around view monitoring device.

One of the plurality of monitoring devices 13 is actuated according to the monitoring instruction of the digital signal processor 11 to generate monitoring data. For example, the digital signal processor 11 outputs the monitoring instruction to the monitoring device and actuates the monitoring device to generate the monitoring data, including a variety of video contents and detection data.

The event recorder 12 receives the monitoring data output by the at least a monitoring device of the monitoring devices and displays and records the monitoring data. For example, the event recorder 12 receives the above monitoring data output by the above monitoring device, and the monitoring data are displayed on the display and recorded in a storage.

The digital signal processor 11 further comprises a processing module 116. The processing module 116 receives the monitoring data output by at least a monitoring device of the monitoring devices, and provides a warning signal or addresses an event corresponding to the monitoring data. For example, the processing module 116 receives the above monitoring data output by the above monitoring device, and processes according to the monitoring data to provide a warning signal or address an event corresponding to the monitoring data.

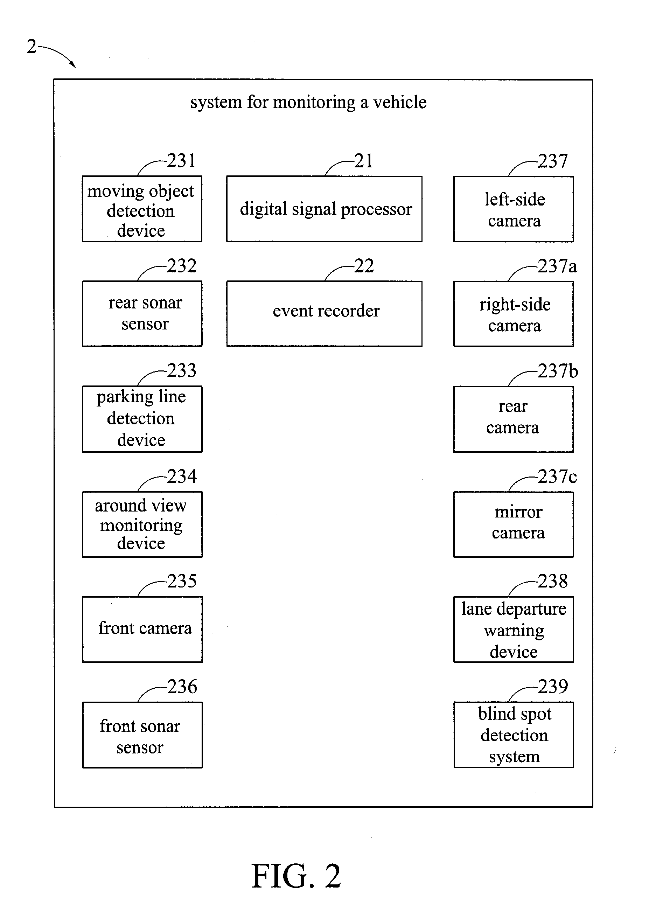

Referring to FIG. 2, a functional block diagram of a system 2 for monitoring a vehicle according to the present invention is provided. The system 2 comprises a digital signal processor 21, an event recorder 22, a moving object detection device 231, a rear sonar sensor 232, a parking line detection device 233, an around view monitoring device 234, a front camera 235, a front sonar sensor 236, a left-side camera 237, a right-side camera 237a, a rear camera 237b, an mirror camera 237c, a lane departure warning device 238, and a blind spot detection system 239. The digital signal processor 11 and the event recorder 12 shown in FIG. 1 are the same as the digital signal processor 21 and the event recorder 22 shown in FIG. 2, respectively, and the monitoring devices 13 shown in FIG. 1 include at least one selected from the group consisting of the moving object detection device 231, the rear sonar sensor 232, the parking line detection device 233, the around view monitoring device 234, the front camera 235, the front sonar sensor 236, the left-side camera 237, the right-side camera 237a, the rear camera 237b, the mirror camera 237c, the lane departure warning device 238 and the blind spot detection system 239 shown in FIG. 2.

In an embodiment, when a vehicle is actuated, the digital signal processor 21 and the event recorder 22 are also actuated immediately. The digital signal processor 21 manages all conditions of the moving vehicle and controls the event recorder 22 to record the conditions (which is detailed in FIG. 1). When the vehicle is just actuated and moves at the speed less than 10 kilometers per hour, the moving object detection device 231, the rear sonar sensor 232 (e.g., moving from a parking lot), the parking line detection device 233, the front camera 235, the front sonar sensor 236 and/or the around view monitoring device 234 are also actuated. When the speed of the vehicle is greater than 10 km/hr and less than 30 km/hr, the around view monitoring device 234 is actuated to monitor the accelerating vehicle in all direction. When the speed of the vehicle is greater than 30 km/hr, the front camera 235, the front sonar sensor 236, the left-side camera 237, the right-side camera 237a, the rear camera 237b and/or the mirror camera 237c are also actuated, to perform an actual monitoring process. When the speed of the vehicle is greater than 60 km/hr, the lane departure warning device 238 and/or a blind spot detection system 239 are actuated, in order to provide a warning signal when the vehicle is off the lane and is very close to other vehicles when changing lanes or the driver, the front camera 235, the left-side camera 237, the right-side camera 237a, the rear camera 237b, and the mirror camera 237c can observe these scenarios. When the speed of the vehicle is less than 60 km/hr and greater than 30 km/hr, the front camera 235, the front sonar sensor 236, the left-side camera 237, the right-side camera 237a, the rear camera 237b and/or mirror camera 237c are actuated again. When the speed of the vehicle is less than 30 km/hr and greater than 10 km/hr, the around view monitoring device 234 is actuated again. When the speed of the vehicle is less than 10 km/hr, the moving object detection device 231, the rear sonar sensor 232, the parking line detection device 233, the front camera 235, the front sonar sensor 236 and/or around view monitoring device 234 are actuated, to assist the driver to park his vehicle to a parking lot.

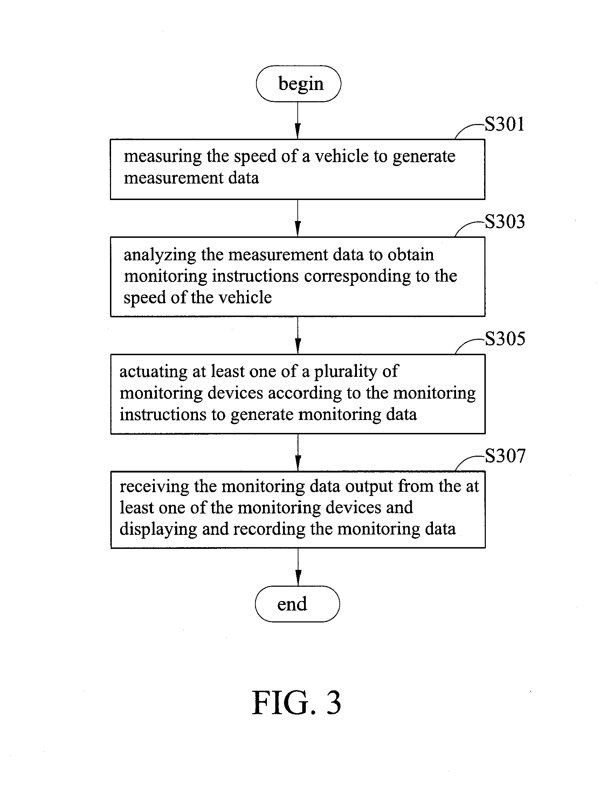

Refer to FIGs. 1 and 3. FIG. 3 is a flow chart illustrating a method for monitoring a vehicle according to the present invention.

The method begins in step S301, in which the speed of the vehicle is measured and measurement data are generated. The method proceeds to step S303.

In step S303, the measurement data are analyzed to obtain monitoring instruction corresponding to the speed of the vehicle. The method proceeds to step S305.

In step S305, at least a monitoring device is actuated according to the monitoring instruction to generate monitoring data. The method proceeds to step S307.

In step S307, the monitoring data output by the at least a monitoring device are received and the monitoring data are displayed and recorded.

Prior to step S301, a digital signal processor and an event recorder installed in the vehicle are actuated.

After step S307, the monitoring data output by the at least a monitoring device are received and a warning signal is provided or an event corresponding to the monitoring data is addressed.

Before the digital signal processor and the event recorder installed in the vehicle are turned off, the method keep executing step S301.

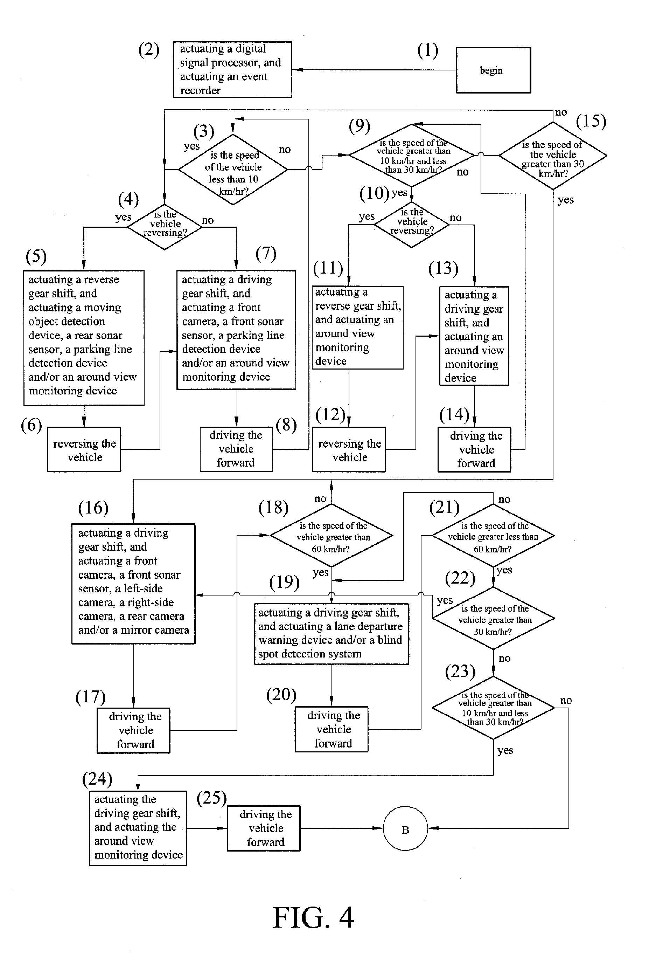

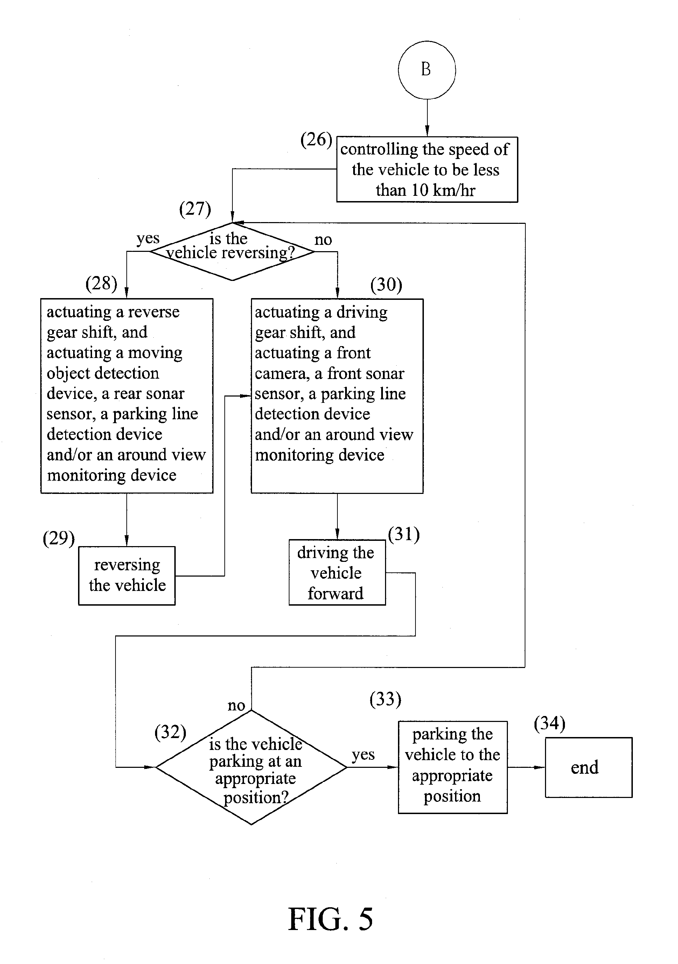

Please refer to FIGs. 2, 4 and 5. FIGs. 4 and 5 are flow charts illustrating a method of monitoring a vehicle of an embodiment according to the present invention. The method comprises the following steps of:
(1) begin;
(2) actuating a digital signal processor 21, and actuating an event recorder 22;
(3) determining whether the speed of the vehicle is less than 10 km/hr, and proceeding to step (4) if the speed of the vehicle is less than 10 km/hr or proceeding to step (9);
(4) determining when the vehicle is reversing, and proceeding to step (5) if the vehicle is reversing or proceeding to step (7);
(5) actuating a reverse gear shift, and actuating a moving object detection device 231, a rear sonar sensor 232, a parking line detection device 233 and/or an around view monitoring device 234;
(6) reversing the vehicle;
(7) actuating a driving gear shift, and actuating a front camera 235, a front sonar sensor 236, a parking line detection device 233 and/or an around view monitoring device 234;
(8) driving the vehicle forward, and proceeding to step (3);
(9) determining whether the speed of the vehicle is greater than 10 km/hr and less than 30 km/hr, and proceeding to step (10) if the speed of the vehicle is greater than 10 km/hr and less than 30 km/hr or proceeding to step (15);
(10) determining whether the vehicle is reversing, and proceeding to step (11) is the vehicle is reversing or proceeding to step (13);
(11) actuating a reverse gear shift, and actuating an around view monitoring device 234;
(12) reversing the vehicle;
(13) actuating a driving gear shift, and actuating an around view monitoring device 234;
(14) driving the vehicle forward, and proceeding to step (9);
(15) determining whether the speed of the vehicle is greater than 30 km/hr, and proceeding to step (16) if the speed of the vehicle is greater than 30 km/hr or proceeding to step (4);
(16) actuating a driving gear shift, and actuating a front camera 235, a front sonar sensor 236, a left-side camera 237, a right-side camera 237a, a rear camera 237b and/or a mirror camera 237c;
(17) driving the vehicle forward;
(18) determining whether the speed of the vehicle is greater than 60 km/hr, and proceeding to step (19) if the speed of the vehicle is greater than 60 km/hr or proceeding to step (16);
(19) actuating a driving gear shift, and actuating a lane departure warning device 238 and/or a blind spot detection system 239;
(20) driving the vehicle forward;
(21) determining whether the speed of the vehicle is less than 60 km/hr, and proceeding to step (22) if the speed of the vehicle is less than 60 km/hr or proceeding to step (19);
(22) determining whether the speed of the vehicle is greater than 30 km/hr, and proceeding to step (16) if the speed of the vehicle is greater than 30 km/hr or proceeding to step (23);
(23) determining whether the speed of the vehicle is greater than 10 km/hr and less than 30 km/hr, and proceeding to step (24) if the speed of the vehicle is greater than 10 km/hr and less than 30 km/hr or proceeding to step (26);
(24) actuating the driving gear shift, and actuating the around view monitoring device 234;
(25) driving the vehicle forward;
(26) controlling the speed of the vehicle to be less than 10 km/hr;
(27) determining whether the vehicle is reversing, and proceeding to step (28) if the vehicle is reversing or proceeding to step (30);
(28) actuating a reverse gear shift, and actuating a moving object detection device 231, a rear sonar sensor 232, a parking line detection device 233 and/or an around view monitoring device 234;
(29) reversing the vehicle;
(30) actuating a driving gear shift, and actuating a front camera 235, a front sonar sensor 236, a parking line detection device 233 and/or an around view monitoring device 234;
(31) driving the vehicle forward;
(32) determining whether the vehicle is parking at an appropriate position, and proceeding to step (33) if the vehicle is parking at an appropriate position or proceeding to step (27);
(33) parking the vehicle to the appropriate position; and
(34) end.

Given the above, it is understood that the system for monitoring a vehicle according to the present invention monitors all the events that the vehicle may encounter from leaving a parking lot, moving on the road and stopping at another parking lot, by mounting a modularized monitoring system onto the vehicle. When the vehicle is actuated, the digital signal processor 11 and the event recorder 12 are also actuated immediately, to begin to monitor and address the events that the vehicle may encounter thereafter. The events are described in the following paragraphs.

Event One: When the vehicle is just actuated and the speed of the vehicle is less than 10 km/hr, the vehicle has to move forward and backward to leave a parking lot. When the vehicle is reversing, the moving object detection device 231 detects moving objects around the vehicle, especially the object moving toward the vehicle. When the moving object detection device 231 detects such objects, the digital signal processor 21 provides necessary instructions to address the events. The rear sonar sensor 232 senses objects behind the vehicle. If the rear sonar sensor 232 senses that the objects are close to the vehicle, the digital signal processor 21 provides necessary instructions to address the events, such as providing a warning sound. The parking line detection device 233 detects of the edge of a traffic island. When the vehicle is moving to a parking lot and is close to the edge of a traffic island, the parking line detection device 233 provides a warning signal via the digital signal processor 21. The around view monitoring device 234 detects objects around the vehicle when the vehicle is reversing, to detect vehicles, kids, people and animals that enter into a moving range of the reversing vehicle. When the around view monitoring device 234 detects some objects around the reversing vehicle, the digital signal processor 21 provides a warning signal and addresses the events. When the vehicle moves forward again, the front camera 235 is actuated to detect objects in front of the vehicle. If a vehicle ahead of the forward moving vehicle is going to be hit by the forward moving vehicle, such an event will be displayed on the display installed in the vehicle. The front sonar sensor 236 detects a vehicle in front of the forward moving vehicle, and measures a distance therebetween. If the vehicle is very close to the forward moving vehicle, the digital signal processor 21 provides a warning signal. The parking line detection device 233 and the around view monitoring device 234 have functions as described previously.

Event Two: When the vehicle is just actuated and no object exists at a distance behind the parking lot, the speed of the vehicle can be greater than 10 km/hr and less than 30 km/hr, and the around view monitoring device 234 will be actuated immediately, to detect an environment around the vehicle and whether other vehicles, kids, people or animals enter into an area where the reversing vehicle is going to approach. If some moving objects approach the vehicle, the digital signal processor 21 provides a warning signal and addresses such events accordingly. When the vehicle is moving forward, the around view monitoring device 234 is still actuated, in order to ensure that the vehicle safely interacts with ambient environment.

Event Three: When the speed of the vehicle is greater than 30 km/hr, indicating that the vehicle is accelerating and getting into a dangerous state, the front camera 235, the left-side camera 237, the right-side camera 237a, the rear camera 237b and the mirror camera 237c are all actuated, to display the environments in front, rear, left and right of the vehicle. The front sonar sensor 236 is also actuated, to detect an environment distant from the vehicle. If some objects are detected, the digital signal processor 21 provides a warning signal and addresses such events.

Event Four: When the speed of the vehicle is greater than 60 km/hr, indicating that the vehicle is moving at a high speed, the lane departure warning device 238 and the blind spot detection system 239 are actuated, to detect whenever the vehicle is off the lane or some objects are very close to the vehicle and cannot be monitored by the driver's eyes or the front camera 235, the left-side camera 237, the right-side camera 237a, the rear camera 237b, or the mirror camera 237c, and enable the digital signal processor 21 to provide a warning signal and address corresponding events.

The present invention provides techniques that have thorough monitoring and troubleshooting to the plural conditions of the movement, acceleration, deceleration, and parking (the second stationary status) while the vehicle starts to move in a parking space at the first stationary status. Further, any moving or static object can be detected as well in order to avoid collision. The lane departure warning voluntarily warns under the conditions of the line of visual of a driver being away from the front direction of the vehicle, such as tired driving, bowing to pick up or see something, to cause lane departure. Therefore, the present invention takes the considerations from all aspects, such as from the first stationary status to the second stationary status, the all equipped devices, etc. Accordingly, the present invention monitors a vehicle by generating a variety of monitoring mechanisms according to the speed of the vehicle.

The foregoing descriptions of the detailed embodiments are only illustrated to disclose the features and functions of the present invention and not restrictive of the scope of the present invention. It should be understood to those in the art that all modifications and variations according to the spirit and principle in the disclosure of the present invention should fall within the scope of the appended claims.

## Claims

1. A method for monitoring a vehicles, comprising the following steps of:
(1) measuring the speed of the vehicle and generating measurement data;
(2) analyzing the measurement data to obtain a monitoring instruction corresponding to the speed of the vehicle;
(3) actuating at least a monitoring device according to the monitoring instruction to generating monitoring data; and
(4) receiving the monitoring data output by the at least a monitoring device and displaying and recording the monitoring data.

2. The method of claim 1, wherein the monitoring device includes at least one selected from the group consisting of a moving object detection device, a rear sonar sensor, a parking line detection device, an around view monitoring device, a front camera, a front sonar sensor, a left-side camera, a right-side camera, a rear camera, an mirror camera, a lane departure warning device, and a blind spot detection system.

3. The method of claim 2, wherein, when the speed of the vehicle is less than a first speed, at least one of the moving object detection device, the rear sonar sensor, the parking line detection device, the front camera, the front sonar sensor, and the around view monitoring device is actuated.

4. The method of claim 2, wherein, when the speed of the vehicle is greater than a first speed and less than a second speed, the around view monitoring device is actuated.

5. The method of claim 2, wherein, when the speed of the vehicle is greater than a second speed and less than a third speed, at least one of the front camera, the front sonar sensor, the left-side camera, the right-side camera, the rear camera, and the mirror camera is actuated.

6. The method of claim 2, wherein, when the speed of the vehicle is greater than a third speed, at least one of the lane departure warning device and the blind spot detection system is actuated.

7. The method of claim 1, further comprising, prior to step (1), actuating a digital signal processor and an event recorder installed in the vehicle.

8. A system for monitoring vehicles, comprising:
a digital signal processor, including:
a measuring module that measures the speed of a vehicle and generates measurement data; and
an analyzing module that analyzes the measurement data to obtain a monitoring instruction corresponding to the speed of the vehicle;
a plurality of monitoring devices, at least one of which is actuated by the monitoring instruction output by the digital signal processor to generate monitoring data; and
an event recorder that receives the monitoring data and displays and records the monitoring data.

9. The system of claim 8, wherein the monitoring devices include at least one selected from the group consisting of a moving object detection device, a rear sonar sensor, a parking line detection device, an around view monitoring device, a front camera, a front sonar sensor, a left-side camera, a right-side camera, a rear camera, an mirror camera, a lane departure warning device, and a blind spot detection system.

10. The system of claim 8, wherein the digital signal processor further comprises a processing module that, when receiving the monitoring data, provides a warning signal or addresses an event corresponding to the monitoring data.
